# EUROPEAN PATENT SPECIFICATION

(11) **EP 3 516 247 B1**
(45) Date of publication and mention of the grant of the patent: **22.06.2022**
(21) Application number: 16704904.8
(22) Date of filing: 11.02.2016
(51) Int. Cl.: F16D 3/06, F16D 9/08, F16D 1/10, F16F 15/30, F16C 23/08, F16C 35/077, F16C 19/54, F16C 27/06

(54) **LINK MEMBER FOR A FLYWHEEL**
VERBINDUNGSELEMENT FÜR EIN SCHWUNGRAD
ÉLÉMENT DE LIAISON POUR UN VOLANT

(30) Priority: 12.02.2015 GB 201502358
(43) Date of publication of application: 31.07.2019
(73) Proprietor: Punch Flybrid Limited, Northampton NN1 1JX (GB)
(72) Inventor: CROSS, Doug, Milton Keynes Buckinghamshire MK4 4JT (GB); JONES, Daniel Richard, Bletchley Buckinghamshire MK2 2DB (GB)
(74) Representative: CSY Herts
(86) International application number: PCT/GB2016/050324
(87) International publication number: WO 2016/128751

(56) References cited:
- WO-A1-2011/136829
- DE-A1-102011 122 082
- DE-T5-112004 002 481
- GB-A- 2 489 021
- US-A1- 2012 261 536
- US-B1- 6 727 616

## Description

This invention relates to a link member for coupling a flywheel shaft to a flywheel drive system. In particular this invention relates to a link member that allows the flywheel shaft to move relative to a drive member of the flywheel drive system.

A flywheel for energy storage and recovery is typically mounted on a shaft in a housing such that the flywheel and the shaft move substantially together. The shaft is mounted on the housing via a bearing arrangement which allows the shaft (and thus the flywheel) to rotate relative to the housing. Kinetic energy can be stored in the flywheel by increasing the flywheel's speed of rotation. Energy can be recovered from the flywheel by transferring the flywheel's rotational energy to another entity, such as a vehicle drive shaft.

A flywheel which rotates at high speeds (e.g. speeds in excess of 15,000 rpm or 20,000 rpm) experiences large air resistance (or 'windage') forces, because of the high tip speed of the flywheel. This leads to loss of kinetic energy from the flywheel. To reduce such losses, a vacuum pump may be used to at least partially evacuate a chamber within the housing, the flywheel being positioned within the chamber. Evacuating the chamber lowers the pressure within the chamber, optimally to approximately a vacuum level, meaning that the flywheel experiences less air resistance as it rotates in the chamber.

It is known that flywheels can exhibit resonant modes which may interact with the housing, thus causing undesirable noise, or causing damage to the flywheel, its support bearings or sealing arrangements over a period of time. In order to damp such vibrations, the flywheel may be isolated from the housing by dampers, for example elastomeric dampers. This may cause the flywheel and housing to undergo translational movement relative to one another (in addition to the intended rotational movement relative to each other). Other causes of relative movement between the housing and flywheel can arise due to vibrations arising from the machine within which the flywheel system is installed; for example, the flywheel may be mounted in a Kinetic Energy Recovery System in a vehicle which traverses rough terrain, such as a construction vehicle (for example an excavator, loading vehicle, mining vehicle, dumper truck, materials handling vehicle or an agricultural vehicle such as a tractor).

A flywheel system typically comprises a flywheel which rotates within a chamber. Such a flywheel is typically mounted on a shaft which is able to rotate on bearing arrangements. The flywheel shaft is typically driven by a flywheel drive system such as a clutched flywheel transmission (which typically requires the sequential switching of slipping clutches) or a continuously variable transmission (CVT).

The flywheel shaft is mounted on the housing via dampers that allow translational movement of all or part of the shaft relative to the housing and therefore also relative to the flywheel drive system. Translational motion of the flywheel and its shaft relative to the flywheel drive system can be problematic for several reasons.

Firstly, the flywheel system and the flywheel drive system may require different fluids to perform their respective desired functions. For example, the flywheel system may be lubricated using a vacuum-grade oil, whereas the neighbouring flywheel drive system may for instance be serviced with gear oil (in the case of a clutched flywheel transmission), automatic transmission fluid (in the case of an automatic transmission), or a traction fluid (in the case of a traction drive CVT). A sealing arrangement may therefore be required to prevent the two fluids from mixing, as such mixing would degrade the properties of one or both fluids, making them unsuitable for their respective functions. Translational movement of all or part of the flywheel shaft relative to the flywheel drive system may make it difficult to maintain a seal between the two systems. Any sealing arrangement intended to separate these different fluids may have its sealing performance and/or its durability compromised by relative translational movement of the flywheel shaft and the flywheel drive system.

Secondly, translational motion (e.g. vibration) of the flywheel and the shaft within the housing may cause translational motion (e.g. vibration) of the neighbouring flywheel drive system itself relative to whatever body it is mounted on or in. Such vibration can be loud and/or physically unsettling, and therefore unpleasant for users of the flywheel drive system. It can also have undesirable consequences if parts of the flywheel system or flywheel drive system come loose due to the vibration. These problems may be particularly bad if one or more of the vibrating bodies achieves a resonant mode of vibration. Furthermore, should any of the bearings or, if applicable, sealing arrangements, vacuum management systems or bearing arrangements of the flywheel system suffer a failure, large torques may be imparted to the flywheel drive system by the flywheel system. It would therefore be beneficial if the flywheel drive system were protected against such excessive torques.

A further challenge exists in that inaccuracies in the control of speed or acceleration of the flywheel by the flywheel drive system (for example, where sequentially selected clutches are employed as a part of the flywheel drive system) may result in large torque disturbances or spikes being generated at the interface between the flywheel drive system and the flywheel system. It would therefore be beneficial if the flywheel system and the drive system were protected against such torque spikes, or if such torque spikes were attenuated or prevented. Furthermore, prevention of such torques also may help to reduce the torque impulses imparted to a drivetrain due to poor accuracy of torque control in the flywheel drive system, so that the flywheel drive system may help to provide smoother delivery of torque, for example, to a vehicle driveline.

GB2489021 , which is considered to form the closest prior art, discloses a high speed flywheel system for a vehicle. It has a mechanical gear drive which is connected to an end of a flywheel shaft. It is concerned primarily with reducing vibration transmissions from flywheel movement, into a housing and thereby into the vehicle.

US2012/0261536 discloses a compliant bearing mount for mounting a bearing relative to a support structure.

US6727616B1 discloses a flywheel energy storage system with a hybrid mechanical/magnetic bearing system. It does not disclose in any detail how energy is transmitted between the flywheel and another machine. The mechanical coupling is described as a shaft with low radial stiffness which is done in order to reduce bearing loads for longer life.

WO2011/136829 discloses a kinetic energy storage device with a pair of counterrotating flywheels coupled to a differential control mechanism. This is done to produce an infinitely variable transmission which has an output to allow kinetic energy to be extracted from and added to the device. The flywheels are connected to the differential by conventional shafts.

DE11 2004002481 discloses a turbo charger with a shaft between the exhaust gas turbine and the inlet pressure turbine. It discloses the use of elastic elements for damping.

DE10 2011122082 discloses a ball bearing arrangement with a resilient bearing sleeve.

The invention aims to overcome or at least ameliorate the problems discussed above.

Accordingly, there is provided a flywheel system as set out in claim 1 appended hereto.

The flywheel system may further include a damper for damping relative movement of the shaft and the housing. In particular, the flywheel system may include a damper arranged to damp relative movement of the flywheel and the housing in a radial direction with respect to the shaft axis, and/or a damper arranged to damp relative movement of the flywheel and the housing in an axial direction with respect to the shaft axis. A damper arranged to damp relative movement of the flywheel and the housing in an axial direction with respect to the shaft axis may be provided on the same side of the flywheel as the torque-transmitting engagement between the link member and the shaft.

The link member may be arranged to allow relative radial movement of the shaft and the drive member, and/or to allow relative axial movement of the shaft and the drive member. The link member may additionally or alternatively be arranged to provide torsional compliance.

In some embodiments, the link member may be arranged to form a mechanical fuse. The link member may, for example, be arranged to fracture at a predetermined torque limit, or at a pre-determined combination of shaft radial displacement with respect to the housing, and a predetermined torque limit.

The flywheel system may further include a lubrication supply. The lubrication supply may, in some examples, be directed to the bearing arrangement.

The link member is a quill shaft coupled to the shaft via a spline, and may be allowed to slide within the shaft and/or within the drive member.

The flywheel may be configured to rotate at speeds of 15,000 rpm or higher. The flywheel may be arranged to rotate within an evacuated chamber.

The flywheel system may include a sealing arrangement that encircles the shaft and is arranged to form a hermetic seal between the shaft and the housing.

In some embodiments, the flywheel system may include a further bearing arrangement mounted on the housing, wherein the further bearing arrangement is arranged to constrain radial movement of the drive member.

There is also provided an apparatus comprising the combination of a flywheel system and a flywheel drive system coupled to the drive member.

The apparatus may further comprise a fluid supply to the flywheel drive system. The fluid supply to the flywheel drive system may be arranged to provide at least one of a lubrication, a cooling and an actuation function to the flywheel drive system.

The apparatus may include a further sealing arrangement arranged to prevent fluid in the flywheel system and fluid in the flywheel drive system from mixing. The further sealing arrangement may be arranged to encircle, contact and form a seal against the drive member. The fluid in the flywheel system and the fluid in the flywheel drive system may be selected in use to be different from one another.

In some embodiments of the apparatus, the fluid in the flywheel system is a vacuum oil and the fluid in the flywheel drive system is selected from one of a gear oil, a traction fluid and an automatic transmission fluid.

The flywheel drive system may include a plurality of selectable clutches.

Specific embodiments of the invention will now be described by way of non-limiting examples, in which:
Figure 1 is a schematic cross section of a flywheel system according to an embodiment of the invention;
Figure 2 is a schematic cross section of a flywheel system coupled via a link member to a flywheel drive system according to an embodiment of the invention.

The present embodiments represent the best ways currently known to the applicant of putting the invention into practice, but they are not the only ways in which this can be achieved. They are illustrated, and they will now be described, by way of example only.

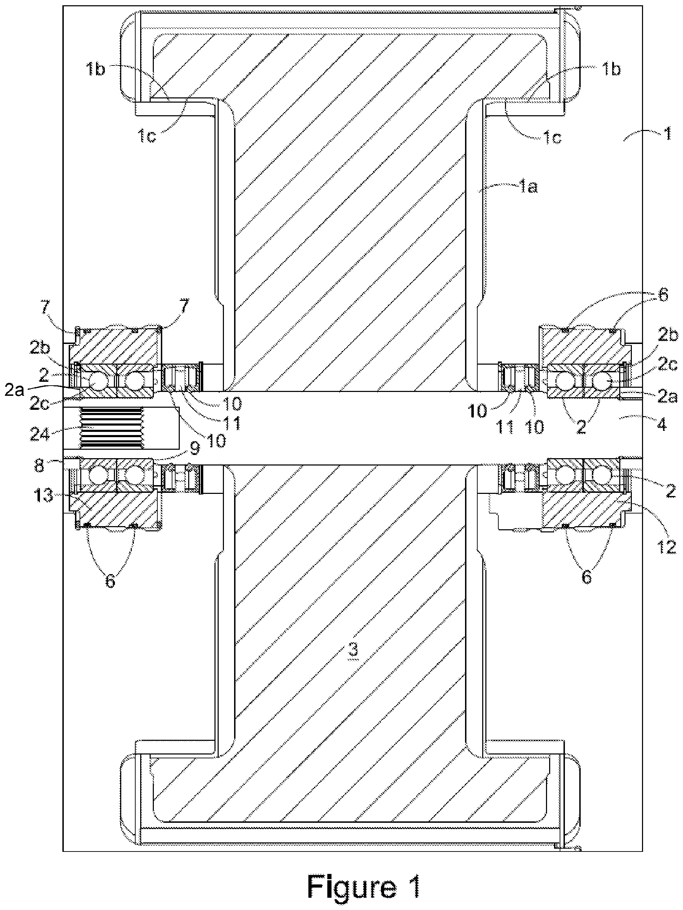

With reference to Figure 1, a flywheel 3 is mounted on a shaft 4 in an evacuated chamber 1a within a housing 1. The flywheel 3 is mounted on the shaft 4 such that the flywheel 3 and the shaft 4 can move (in particular, rotate) substantially together, generally as one mass. The flywheel 3 and the shaft 4 may for example be integrally formed as a single component, or may be formed as separate components.

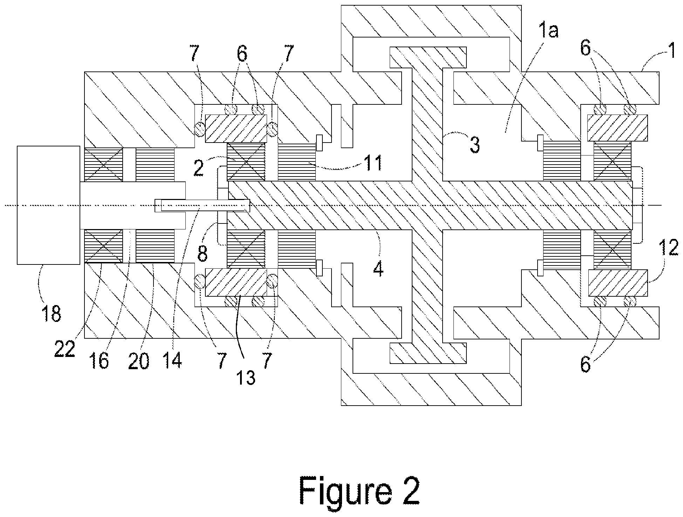

The shaft 4 passes through an aperture of a first carrier 12 (see right-hand side of Figures 1 and 2). The shaft 4 is mounted on the first carrier 12 via a bearing arrangement. The bearing arrangement includes two bearings 2, each bearing 2 including an inner race 2a (radially closest to the shaft 4 in Figure 1), an outer race 2b (radially furthest from the shaft 4 in Figure 1) and a rolling element 2c positioned between the inner race 2a and the outer race 2b. The bearings 2 may be angular contact bearings or other types of bearing.

The bearing arrangement is mounted on the first carrier 12. The bearing arrangement may be constrained axially (i.e. in a direction parallel to the axis of the shaft 4), relative to the first carrier 12, by at least one retaining ring (such as a snap ring or circlip) and at least one shoulder of the first carrier 12.

In the illustrated embodiment, the flywheel-side of the outer race 2b of the bearing 2 closest to the flywheel 3 is positioned close to a shoulder of the first carrier 12. The outer-side (relative to the flywheel 3) of the outer race 2b of the bearing 2 furthest from the flywheel 3 is positioned close to a retaining ring (such as a circlip with a shim). The retaining ring (e.g. circlip) may apply a force to the outer race 2b of the bearing 2 furthest from the flywheel 3 to urge the outer race 2b towards the outer race 2b of the bearing 2 closest to the flywheel 3, urging both outer races 2b towards the shoulder of the first carrier 12 and keeping the outer races 2b of the bearings 2 substantially axially fixed relative to the first carrier 12. The circlip permits only a small degree of relative axial movement of the bearing arrangement and the first carrier 12.

Thus the bearing arrangement may be mounted on a first carrier 12 and constrained, such that it is substantially fixed in position relative to the first carrier 12, by a retaining ring (e.g. circlip) and by a shoulder of the first carrier 12. The bearing arrangement may move axially substantially together with the first carrier 12. The first carrier 12 and the bearing arrangement may also or alternatively move radially (i.e. in a direction substantially along a radial line of the shaft 4) substantially together.

A sealing arrangement 11 is also included in the flywheel system near the first carrier 12. The illustrated sealing arrangement 11 includes two seals 10 which contact or nearly contact the shaft 4 and which are positioned slightly apart from one another along the axis of the shaft 4, so that the two seals 10 face each other and a cavity is provided between the seals 10 along the axis of the shaft 4.

In the illustrated examples, the seals 10 are lip seals, though other types of seals may be used. The seals 10 may be polymeric seals such as polyimide seals or rubber seals. The seals 10 may include polytetrafluoroethylene (PTFE), graphite, molybdenum disulphide and/or other materials. In some examples, the seals 10 may be magnetic liquid rotary seals. The seals 10 substantially contact the shaft 4, so that the seals 10 seal against the shaft 4. Alternatively the sealing arrangement 11 may comprise a mechanical face seal.

As can be seen in Figure 1, a cavity is defined between the seals 10. The seals 10 define the axial boundaries of the cavity, i.e. the seals 10 define how far along a line parallel to the axis of the shaft 4 the cavity extends. The shaft 4 defines an inner radial boundary of the cavity, and a circumferential wall, defined by the housing 1, demarcates the outer boundary of the cavity in the radial direction of the shaft 4.

The seals 10 and the cavity extend circumferentially around the shaft 4, so that they encircle the shaft. The seals 10 and the cavity are positioned and extend in planes roughly orthogonal to the axis of the shaft 4. The cavity is arranged such that it can be at least partially filled with a sealing fluid. The sealing fluid may be any suitable liquid or gas. In the illustrated example, the cavity is filled with an oil that acts as the sealing fluid. The seals 10 are arranged such that they retain the sealing fluid within the cavity, or retain as much of the sealing fluid as possible within the cavity. Any sealing fluid which leaks past seal 10 closest to the flywheel out of the cavity and into the evacuated chamber 1a may be recovered by a vacuum pump which evacuates the chamber 1a. The vacuum pump may scavenge the sealing fluid from, for example, the bottom of the evacuated chamber 1a and return the sealing fluid to a reservoir of sealing fluid.

In some examples, the sealing fluid may be a fluid that is shared between the seals 10 and a flywheel drive system coupled to the flywheel system, such as a flywheel transmission. The sealing fluid might for instance be a gear oil, an automatic transmission fluid, or a continuously variable transmission fluid such as a traction fluid which may be used in the case of a traction drive.

In some examples, the sealing fluid may be a low-viscosity oil. The oil may be a vacuum grade oil that does not vaporise at the pressure of the evacuated chamber. The oil may for example have a kinematic viscosity of between approximately 5 mm² s⁻¹ and 15 mm² s⁻¹ at a working temperature of the flywheel apparatus. Low-viscosity oil may advantageously reduce drag in the sealing arrangements.

The seals 10 in combination with the sealing fluid are arranged to prevent ingress of fluids (e.g. air, lubricant) and other matter into the chamber 1a within the housing 1.

The seals 10 and sealing fluid help maintain a low (ideally vacuum) pressure on the flywheel side of the sealing arrangement 11, within the chamber 1a. The sealing arrangement 11 is arranged to maintain a pressure difference of approximately 1 atmosphere between its two sides, i.e. between the flywheel (vacuum) side of the sealing arrangement 11 and the atmosphere side of the sealing arrangement 11. The sealing arrangement 11 may form a hermetic seal against the shaft. A thin layer or film of fluid between a lip of a seal 10 of the sealing arrangement and the shaft 4 may ensure that the hermetic seal is formed.

Sealing arrangement 11 is mounted within the housing 1 along the shaft 4 from the bearing arrangement. In the illustrated example, sealing arrangement 11 is mounted on the flywheel side of the bearing arrangement, such that the sealing arrangement 11 is closer to the flywheel 3, along the axis of the shaft 4, than the bearing arrangement is. In other examples, the bearing arrangement may be mounted closer to the flywheel 3 than the sealing arrangement 11 is. Sealing arrangement 11 may be mounted adjacent to the bearing arrangement, or there may be other elements of the flywheel system interposed between the sealing arrangement 11 and the bearing arrangement.

As previously described, the shaft 4 may translate relative to the housing 1, for example due to vibration of the flywheel 3 and the shaft 4, due to vibration or resonance of the flywheel 3 and the shaft 4 within the housing 1, or due to movement of the housing 1 imposed by accelerations of the apparatus in which the flywheel system is installed, such as a vehicle traversing rough terrain.

Rotation of the shaft 4 about a different axis from its longitudinal axis (i.e. about an axis which is offset from the longitudinal axis of the shaft 4, and/or at an angle to the longitudinal axis of the shaft 4) relative to the housing 1 may give rise to such translational movement of at least a part of the shaft 4 relative to the housing 1. In particular, rotation about such an axis may cause translational movement, relative to the housing 1, of a part of the shaft 4 which is mounted via one or more bearings 2 in a bearing arrangement on the first carrier 12, thus causing corresponding translational movement of the bearing arrangement and the first carrier 12. Rotation about such an axis may cause a rocking movement of the shaft 4 relative to the housing 1.

A wide spacing of the bearings 2 axially along the shaft 4 may help prevent such a rocking movement. In some embodiments there may therefore be at least one bearing arrangement on one side of the flywheel 3, and at least one other bearing arrangement on the other side of the flywheel 3. In other embodiments, the shaft 4 may be supported in a cantilevered fashion by one or more bearing arrangements on only one axial side of the flywheel 3. In either case, the spacing between the supporting bearings 2 may be arranged to be as wide as possible.

The positioning of the bearing arrangement(s) and sealing arrangement(s) 11 relative to each other and to the evacuated chamber 1a can also be varied. For instance, in some embodiments, one bearing arrangement is positioned outside the evacuated chamber 1a (i.e. axially outside a sealing arrangement 11), and another bearing arrangement is positioned inside the evacuated chamber 1a. The bearing arrangement inside the evacuated chamber 1a may be on the same side of the flywheel 3 as the bearing arrangement which is outside the evacuated chamber 1a, or may be on the opposite side of the flywheel 3.

In some embodiments, such as the embodiment illustrated in Figure 1, a flywheel apparatus may include at least one damper 6, 7 for damping or attenuating relative movement, vibration or resonant modes of the housing 1 and/or the flywheel 3. First and second carriers 12, 13 may be mounted on the housing 1 via one or more dampers 6, 7. The dampers 6, 7 may isolate the shaft 4 from the housing 1. The dampers 6, 7 may do this by isolating the shaft 4 from the bearing arrangement(s), and/or by isolating the bearing arrangement(s) from the housing 1, depending on the number and positioning of the dampers 6, 7. Where the bearing arrangements are mounted in carriers 12, 13, the carriers 12, 13 may be isolated from the housing 1.

In the particular embodiment illustrated in Figure 1, there are two dampers 6 on the right-hand side of the flywheel 3 (dampers 6 on the right-hand side of Figure 1), for damping relative movement in a radial direction of the shaft 4 and the housing 1; two dampers 6 on the left-hand side of the flywheel 3 (dampers 6 on the left-hand side of Figure 1), for damping relative movement in a radial direction of the shaft 4 and the housing 1; and two dampers 7 on the left-hand side of the flywheel 3 for damping relative movement in an axial direction of the shaft 4 and the housing 1 (dampers 7 on the left-hand side of Figure 1).

As illustrated on the right-hand side of Figure 1, the first carrier 12 is mounted on the housing 1 via two dampers 6. The dampers 6 are arranged to damp relative movement, in a direction substantially along a radial line of the shaft 4, of the housing 1 and the first carrier 12. Because the bearings 2 which are mounted on the first carrier 12 are in direct contact with the shaft 4 and the flywheel 3 is mounted on the shaft 4 such that the flywheel 3 and the shaft 4 move substantially together, damping the relative radial movement of the housing 1 and the first carrier 12 damps the relative radial movement of the housing 1 and the flywheel 3.

The dampers 6, which act to damp relative movement of the housing 1 and the flywheel 3 in a direction substantially along a radial line of the shaft 4, may be referred to as 'radial' dampers. The dampers 6 are mounted for radial compression. The dampers 6 may be mounted for shear in planes substantially orthogonal to the axis of the shaft 4. The dampers 6 provide radial restraint to the flywheel 3. The dampers 6 may be configured such that they allow relative radial movement of the flywheel 3 and the housing 1 up to a certain distance. The dampers 6 may for instance allow the flywheel 3 to move a pre-determined radial distance from its radial equilibrium position relative to the housing 1 (i.e. the radial position relative to the housing 1 to which the flywheel 3 returns when additional external forces are no longer applied to the housing 1 and/or the flywheel 3)

As illustrated on the left-hand side of Figure 1, shaft 4 also passes through an aperture of a second carrier 13. The second carrier 13 is separated axially (i.e. in a direction parallel to the axis of the shaft 4) from the first carrier 12. The second carrier 13 is mounted on the housing 1 on the opposite side of the flywheel 3 from the first carrier 12. The second carrier 13 is mounted on the housing 1 via further 'radial' dampers 6. The further radial dampers 6, analogously to the dampers 6 via which the first carrier 12 is mounted on the housing 1 (on the right-hand side of Figure 1), are arranged to damp relative motion, in a direction along a radial line of the shaft 4, of the housing 1 and the second carrier 13.

Like the first carrier 12, the second carrier 13 has mounted on it a bearing arrangement including two bearings 2. Like on the first carrier 12, the bearing arrangement is mounted on the second carrier 13 such that a sealing arrangement 11 mounted on the housing 1 near the second carrier 13 is closer to the flywheel 3 than the bearing arrangement is, i.e. the sealing arrangement 11 is mounted along the axis of the shaft 4 from the bearing arrangement, towards the flywheel 3.

The second carrier 13 may be fixed axially, relative to the shaft 4, by a shoulder 9 of the shaft 4 against which one side of one of the inner races 2a of the bearings 2 in the bearing arrangement abuts; a retaining nut against which one side of another of the inner races 2a of the bearings 2 in the bearing arrangement abuts; and a retaining ring (e.g. circlip) positioned close to an outer race 2b of one of the bearings 2 in the bearing arrangement. The outer race 2b of another of the bearings 2 is positioned close to a shoulder of the second carrier 13 and may apply a force to the second carrier 13, keeping the second carrier 13 fixed axially relative to the bearing arrangement and the shaft 4. Thus the second carrier 13 is constrained to move axially with the shaft 4. The second carrier 13 cannot move axially relative to the shaft 4. The second carrier 13 can only move axially if the shaft 4 moves axially (subject to a small degree of movement permitted by the retaining ring). The bearing races 2a, 2b are a close sliding or interference fit on the shaft 4, and within the carrier 13, such that the second carrier 13 is constrained to move radially with the shaft 4. The second carrier 13 cannot move radially relative to the shaft 4. The second carrier 13 can only move radially if the shaft 4 moves radially. The first carrier 12 may be constrained in an analogous way, such that the first carrier 12 is constrained to move axially and/or radially with the shaft 4.

As can be seen in Figure 1, second carrier 13 is also mounted on housing 1 via additional dampers 7. The dampers 7 are arranged to damp relative movement, in a direction substantially parallel to the longitudinal axis of the shaft 4, of the housing 1 and the second carrier 13. Because the second carrier 13 and its bearing arrangement are constrained such that they can move axially, relative to the housing 1, only when the shaft 4 moves axially relative to the housing 1, damping the relative axial movement of the housing 1 and the second carrier 13 damps the relative axial movement of the housing 1 and the flywheel 3. The dampers 7, which act to damp relative movement of the housing 1 and the flywheel 3 in a direction substantially parallel to the longitudinal axis of the shaft 4, may be referred to as 'axial' dampers.

The dampers 7 are mounted for axial compression. The dampers 7 may be mounted for shear in planes substantially parallel to the axis of the shaft 4. The dampers 7 provide axial restraint to the flywheel 3. Analogously to dampers 6, dampers 7 may be configured such that they allow relative axial movement of the flywheel 3 and the housing 1 up to a certain distance. The dampers 7 may for instance allow the flywheel 3 to move a pre-determined axial distance from its axial equilibrium position relative to the housing 1 (i.e. the axial position relative to the housing 1 to which the flywheel 3 returns when additional external forces are no longer applied to the housing 1 and/or the flywheel 3).

In the illustrated embodiment, the first carrier 12 is not provided with axial dampers 7. Relative movement of the first carrier 12 and the housing 1 in the axial direction is not directly damped. Relative movement of the second carrier 13 and the housing 1 in the axial direction is directly damped by the dampers 7 illustrated in Figure 1. Thus, in the illustrated embodiment, the dampers 7 via which the second carrier 13 is mounted on the housing 1 alone damp the relative axial movement of the housing 1 and the flywheel 3.

The first carrier 12 therefore has greater freedom of axial movement (relative to the housing 1) than the second carrier 13 has. The first carrier 12 may be free to float axially within the housing 1, while the second carrier 13 is constrained by the axial dampers 7 which limit the axial movement of the second carrier 13 within the housing 1 and isolate the second carrier 13 from the housing 1.

The greater freedom of axial movement of the first carrier 12 may allow the flywheel apparatus to continue functioning - without applying too much stress to and/or damaging any of the bearing arrangements, sealing arrangements 11 or carriers 12, 13 - if, for example, the shaft 4 undergoes thermal expansion during operation of the flywheel system, or the shaft 4 is not manufactured to optimal or intended dimensions. The greater freedom of axial movement of the first carrier 12 may therefore increase the allowable tolerance of certain dimensions of the flywheel apparatus, thereby reducing cost.

The dampers 6, 7 may be made of any suitable material for effecting damping of the relative movement of the housing 1 and the flywheel 3. The dampers 6, 7 may, for instance, include elastomeric material such as natural rubber or a fluorocarbon. Each damper may preferably take the form of a ring, preferably an O-ring, but dampers may also be elastomeric strips or elastomeric pieces. Suitable materials include any elastomeric substance such as a fluorocarbon, natural rubber or polyurethane. As illustrated in Figure 1, the carriers 12, 13 are mounted on the housing 1 via dampers 6, 7, such that the dampers 6, 7 are positioned between the carriers 12, 13 and the housing 1. In some examples, one or more carriers 12, 13 may comprise a metalastic bush, comprising a cylindrical metal sleeve with any suitable damping material bonded around its circumference. Such a bush may provide both radial damping via compression of the damping material, and axial damping via shear of the damping material. In the illustrated examples, the dampers 6, 7 are positioned radially outwardly of the bearing arrangements. In other examples, the dampers 6, 7 (and/or metalastic bushes) may be positioned radially inwardly of the bearing arrangements to damp the relative movement of the shaft 4 and the housing 1.

The material, dimensions and other properties of the dampers 6, 7 may be chosen and/or configured to make the rate of damping suitable for the intended application of the flywheel 3 in housing 1, taking into account the magnitudes and directions of the forces that may be applied to the flywheel system to cause relative translational movement of the housing 1 and the flywheel 3. The dampers 6, 7 may be arranged to cause critical damping, under-damping or over-damping of the relative movement of the housing 1 and the flywheel 3.

In particular, depending on the application of the flywheel system, the dampers 6, 7 may be arranged to allow but damp relative axial and/or radial motion of the flywheel 3 and the housing 1, or to prevent relative axial and/or radial motion of the flywheel 3 and the housing 1 altogether. The dampers 6, 7 may be arranged to damp one or more vibrational modes exhibited by the flywheel 3 and/or the housing 1, in particular resonant modes of vibration that are likely to occur in the range of operating speeds of the flywheel 3. The dampers 6, 7 may, for instance, be arranged to damp a rocking mode of the flywheel 3, in which the flywheel 3 rocks on its bearings 2. As discussed above, it may be advantageous for the bearings 2 to be widely separated along the axis of the shaft 4 to reduce the effects of the rocking movement.

Mounting the carriers 12, 13 on the housing 1 via dampers 6, 7 means that the carriers 12, 13, the bearing arrangements and the shaft 4 move relative to the housing 1, and have their movement relative to the housing 1 damped and/or constrained, substantially together.

With reference to Figure 2, a link member or coupling 14 permits relative movement of a flywheel 3 and a housing 1, as described above, when the flywheel 3 is coupled, via the link member 14, to a neighbouring drive system 18 such as a flywheel drive transmission (that may include a CVT or a Clutched Flywheel Transmission). The neighbouring drive system 18 may itself be operatively coupled to a vehicle prime mover, a final drive or a part of the transmission between the two. As explained in more detail below, the link member 14 may take the form of a quill shaft which couples a shaft 4 on which the flywheel 3 is mounted, to a drive member 16. The drive member 16 engages the neighbouring drive system 18 to transfer rotational energy, rotational momentum and/or torque between the flywheel 3 and the neighbouring drive system 18. In other examples, the link member 14 may be any other form of torsional coupling that allows a degree of radial movement, such as a bellows or beam type coupling, preferably formed from a stainless steel. The coupling may include two metal members with a flexible member between, such as a simple torsional elastomeric coupling. The metal members may interlock, with a spacing between the interlocking members that is occupied by a flexible member formed from a polymer, an elastomer or a combination of the two; such a coupling may be a jaw coupling. The coupling may include one or more preferably two universal joints which optionally include a flexible member formed from a compliant compound such as an elastomer. The coupling may be an Oldham coupling.

Preferably the coupling is a quill shaft.

The link member 14 (e.g. quill shaft) allows the flywheel 3 and the shaft 4 on which the flywheel 3 is mounted to move (i.e. to translate as well as to rotate) relative to the housing and allows the drive member 16 to remain substantially stationary (in a translational sense) relative to the housing 1. The link member 14 enables radial and/or axial translational movement (as well as rotational movement), relative to the housing 1, of the shaft 4 on which the flywheel 3 is mounted, but does not cause corresponding radial and/or axial movement of the drive member 16 (via which the flywheel 3 is connected to the neighbouring drive system 18). Thus any movement such as axial translation, radial translation or rocking of the flywheel 3 will not be transmitted to the drive member 16. This may prevent damage, wear, premature failure or vibration from occurring in the neighbouring flywheel drive system 18.

The link member 14 has a proximal end which is proximal to the shaft 4 on which the flywheel 3 is mounted. The distal end of the link member 14 is distal from the shaft 4 on which the flywheel 3 is mounted. The link member 14 may be arranged in torque-transmitting engagement with the shaft 4 on which the flywheel 3 is mounted, and also with the drive member 16.

In the illustrated embodiments, the second carrier 13 is provided with both radial dampers 6 and axial dampers 7, while the first carrier 12 is provided with radial dampers 6 only. Movement of the second carrier 13 is therefore constrained in directions parallel to the axis of the shaft 4 and in directions along radial lines of the shaft 4. Movement of the first carrier 12 is constrained in directions along radial lines of the shaft 4.

The second carrier 13 is positioned at or near the end of the shaft 4 at which the shaft 4 and the link member 14 are in torque-transmitting engagement. The axial dampers 7 associated with the second carrier 13 therefore reduce the extent of relative axial movement of the shaft 4 and the housing 1 that the link member 14 must accommodate, since the axial dampers 7 constrain the movement of the second carrier 13 relative to the housing 1.

The first carrier 12 is positioned at the end of the shaft 4 opposite the end at which the shaft 4 and the link member 14 are in torque-transmitting engagement. The comparative freedom of movement of the first carrier 12 relative to the housing 1 (because the first carrier 12 does not have axial dampers 7 to constrain its axial movement) allows the flywheel system to accommodate changes in, for example, the length of the shaft 4 during operation of the flywheel system.

If the shaft 4 becomes heated during operation of the flywheel system and extends in length, the end of the shaft 4 supported by the second carrier 13 will remain in substantially the same position relative to the housing 1 because of the radial and axial constraint provided by the radial and axial dampers 6, 7. The end of the shaft 4 supported by the first carrier 12 will be able to move axially relative to the housing 1 (e.g. to the right in Figures 1 and 2) to accommodate the increased length of the shaft 4.

When the shaft 4 has cooled and shortened in length, the end of the shaft 4 supported by the second carrier 13 will still be in substantially the same position relative to the housing 1, but the end of the shaft 4 supported by the first carrier 12 will move (e.g. to the left in Figures 1 and 2) to accommodate the reduced length of the shaft.

In some examples, the drive member 16 may be provided with a sealing arrangement 20. The sealing arrangement 20 may provide a seal between the flywheel system and the neighbouring drive system 18, as will be explained in greater detail below, to prevent fluid(s) from the flywheel system mixing with fluid(s) from the neighbouring drive system 18.

The apparatus of Figure 2 includes a flywheel system comprising a flywheel 3 mounted on a shaft 4 inside an evacuated chamber 1a within a housing 1, as described above with reference to Figure 1. The shaft 4 is operatively coupled to a drive member 16 such that rotation of the shaft 4 is arranged to cause rotation of the drive member 16, and rotation of the drive member 16 is arranged to cause rotation of the shaft 4. The drive member 16 may be any type of drive member suitable for the particular drive system 18. The drive member 16 may, for example, be a shaft, a gear or another form of mechanical linkage that can be arranged to allow drive to be transferred between a flywheel system and a flywheel drive system. Where the drive member 16 is a gear, or is coupled to a gear, drive may be taken off radially from this gear to the drive system 18. Typically this gear forms one half of a step-up ratio between the drive system 18 and the drive member 16, allowing the flywheel to be driven at high speed, typically more than 15,000rpm.

In the illustrated example, the shaft 4 is operatively coupled to the drive member 16 via a quill shaft 14. The quill shaft 14 is an example of a suitable link member. The quill shaft 14 is arranged such that it can accommodate relative radial movement of the shaft 4 (which may move radially relative to the housing 1 when radial dampers 6 are compressed) and the drive member 16 (which is fixed relative to the housing 1 by a bearing arrangement 22 on which the drive member 16 is mounted, and which must be constrained so that damage to internal components of the drive system 18 to which an opposite end of drive member 16 is attached is minimised or prevented). To this end, the quill shaft 14 may be slender and/or flexible, allowing the quill shaft 14 to bend to accommodate relative radial movement of the shaft 4. The quill shaft 14 may also be torsionally compliant in order to provide significant wind-up capability, thus damping torsional vibrations and reducing torque spikes which may be imparted to the flywheel 3 by the flywheel drive system 18 (for example due to poor control of torque applied to the flywheel 3) or vice versa. The bearing arrangement 22 may be referred to as a further bearing arrangement. The bearing arrangement 22 may include one or more bearings and may constrain the radial and/or axial movement of the drive member 16 relative to the housing 1.

The quill shaft 14 includes, at or near a proximal end, a splined portion corresponding to a splined portion 24 (Figure 1) at or near one end of the shaft 4. The splined portion 24 of the shaft 4 and the splined portion of the quill shaft 14 are arranged to engage with one another such that rotational energy, rotational momentum and/or torque can be transferred between the shaft 4 and the quill shaft 14. Additionally, the splined portions of the shaft 4 and the quill shaft 14 can slide axially relative to one another, to enable the shaft 4 and the quill shaft 14 to move axially relative to one another while remaining configured to transfer rotational energy, rotational momentum and/or torque between the shaft 4 and the quill shaft 14.

In the particular example illustrated in Figure 2, the quill shaft 14 has a narrower diameter than the shaft 4. The splined portion of the quill shaft 14 is external to the quill shaft 14, i.e. on the external surface of the quill shaft 14. The splined portion 24 of the shaft 4 is internal to the shaft 4, i.e. on the internal surface of the shaft 4. The splined portion of the shaft 4 and the splined portion of the quill shaft 14 engage with each other when the end of the quill shaft 14 including the splined portion enters the end of the shaft 4 including the corresponding splined portion 24.

In other examples, the quill shaft 14 may have a larger diameter than the shaft 4, in which case the shaft 4 may be externally splined, the quill shaft 14 may be internally splined, and the end of the shaft 4 including the splined portion may slot inside the end of the quill shaft 14 including the corresponding splined portion. The pitches, heights, lengths and other dimensions of the splines of the two splined portions are arranged such that the splined portions are able to transfer rotational energy, rotational momentum and/or torque between the shaft 4 and the quill shaft 14.

The quill shaft 14 includes at its distal end engagement means, arranged for coupling the quill shaft 14 to drive member 16. The engagement means may include a splined portion on quill shaft 14 and a corresponding splined portion on drive member 16. Preferably, in such embodiments, there are means for limiting the travel of the quill shaft 14 within the drive member 16. For example, the quill shaft 14 may have a flange or washer attached (e.g. bolted) to its end. The flange or washer may be arranged to abut vertical faces of the splines in the drive member 16, thus limiting axial travel of the quill shaft 14 relative to the drive member 16 in one direction. A bung inserted into the drive member 16 may limit axial travel of the quill shaft 14 in the other direction. Thus axial movement of the quill shaft 14 within the drive member 16 may be constrained or prevented with the use of two such axial end stops.

In other arrangements there are means for bolting or otherwise rigidly attaching quill shaft 14 to drive member 16. In such arrangements, the quill shaft 14 is fixed both axially and radially, relative to the housing 1 and the drive member 16, at the distal end of the quill shaft 14, while the proximal end of the quill shaft 14 can move radially, relative to the housing 1, to accommodate radial movement of the shaft 4 relative to the housing 1 and the drive member 16. Axial movement of the shaft 4 relative to the housing 1 and the drive member 16 is accommodated by the splined portions of the shaft 4 and the quill shaft 14 engaging with each other in a sliding sense, i.e. such that the splines of the splined portions can slide past one another but remain engaged to transfer rotational energy, rotational momentum and/or torque.

In other examples, the shaft 4, the quill shaft 14 and the drive member 16 may be provided with alternative means for transferring rotational energy, rotational momentum and/or torque between the shaft 4 and the quill shaft 14 in such a way that the shaft 4 can move axially and/or radially relative to the drive member. The quill shaft 14 may, for example, include a flange at the distal end. The flange may be connectable to the drive member 16, e.g. with a bolt or other suitable connecting means. Alternatively, the quill shaft 14 may be an integral part of the drive member 16. In yet another variation, the quill shaft 14 may be an interference fit in the drive member 16.

In another set of embodiments, the quill shaft 14 may be arranged to slide axially relative to the drive member 16 but may be fixed axially relative to the shaft 4, using similar methods of constraining axial movement of the quill shaft 14 to those described above. In all embodiments, the quill shaft 14 is arranged such that it can transfer rotational energy, rotational momentum and/or torque between the shaft 4 and the drive member 16.

Drive member 16 may be connected (e.g. at an end opposite to the quill shaft 14 end) to drive system 18, which may be, for example, a flywheel transmission. The flywheel transmission could take the form of a continuously variable transmission (CVT) or a clutched flywheel transmission, for instance. The drive member 16 may be connected to the drive system 18 such that rotational energy, rotational momentum and/or torque can be transferred between the drive system 18 and the drive member 16. Thus the shaft 4, the quill shaft 14, the drive member 16 and the drive system 18 are arranged such that rotational energy, rotational momentum and/or torque can be transferred between the flywheel 3 (which rotates with the shaft 4) and the drive system 18. The energy, momentum and/or torque may be transferred in either direction between the flywheel 3 and the drive system 18.

The quill shaft 14 may provide a mechanical fuse between the flywheel 3 and the drive system 18. The quill shaft 14 may for example protect the drive system 18 from damage due to torque overload in the event that component failure occurs within the flywheel system. Such component failure could result in a flywheel contact surface 1c contacting a housing contact surface 1b, such contact leading to rapid deceleration of the flywheel assembly and high torques being imparted to the neighbouring drive system 18. However, the quill shaft 14 may be arranged to prevent torque transfer between shaft 4 and drive member 16 for torques beyond a certain magnitude. The quill shaft 14 may for example be provided with means for disconnecting at one or both ends (from the shaft 4 and/or the drive member 16) when torque beyond a given magnitude is applied, or to break or fracture when torque beyond a given magnitude is applied.

The quill shaft 14 may include a section of reduced strength (for example a reduced diameter section) arranged to fracture at a pre-determined torque level within that section of the quill shaft 14. The quill shaft 14 may include a shear pin or keyway arranged to fracture at a pre-determined torque level. These may be within the engaging portions of the shaft 4 and the quill shaft 14, or within the engaging portions of the quill shaft 14 and the drive member 16, or they may be installed between two portions of the quill shaft 14, the drive being transmitted between each portion by the said keyway or shear pin. The drive system 18 and/or flywheel system may thus be protected from damage due to torque overload. Advantageously the quill shaft 14 is typically less expensive to replace than the flywheel 3, the shaft 4 or the drive member 16, especially if the drive member 16 is a gear.

The quill shaft 14 advantageously means that an output gear (for example) of the flywheel 3 can be mounted on a neighbouring drive member (e.g. drive member 16), allowing the shaft 4 to move relative to the housing 1 and the drive system 18 without causing damage to or vibration of the output gear or components of the drive system 18. The quill shaft 14 decouples the radial and axial movement of the second carrier 13 (and shaft 4) from the drive member 16 and thus from any components of the drive system 18 to which the drive member 16 may be connected. The fact that the quill shaft 14 slots inside the shaft 4 reduces the overall system package volume.

As noted above, in some examples, a sealing arrangement 20 may be provided for the drive member 16. This may be referred to as a further sealing arrangement 20. The further sealing arrangement 20 may be arranged to seal against the housing 1 and the drive member 16, to prevent (or at least reduce) the flow of fluid or other matter along the drive member 16 from within housing 1 out of housing 1, and/or to prevent (or at least reduce) the flow of fluid or other matter along the drive member 16 from outside housing 1 into housing 1. Like the sealing arrangement 11 described above in the context of Figure 1, the further sealing arrangement 20 may include at least one seal such as a lip seal. In some embodiments, the further sealing arrangement 20 may include two lip seals, the two lip seals defining a cavity substantially similar to that of sealing arrangement 11 described above with reference to Figure 1. The cavity may allow sealing fluid from one or both of the drive system 18 and the flywheel system that leaks past its respective seal (for example, in the case of a worn or damaged seal) to drain away such that each fluid is prevented from contaminating the other. The drain may direct the fluid to a catcher tank, or to the outer environment.

The further sealing arrangement 20 may serve to prevent fluid such as transmission oil, gear oil, automatic transmission fluid, traction fluid or other fluids associated with the drive system 18 from entering the flywheel system along the drive member 16. Similarly, the further sealing arrangement 20 may serve to prevent fluid such as low-viscosity vacuum oil associated with the bearing arrangements, the shaft 4 and/or the sealing arrangements 11 from exiting the flywheel system along the drive member 16. This may prevent the two different types of fluid from becoming contaminated and mixed with one another.

In some embodiments, the drive system 18 may use the same fluid as is present in the sealing arrangements 11 (and/or possibly in and around the bearings 2 and shaft 4) in which case a further sealing arrangement 20 may be omitted from the apparatus.

The apparatus described above may be suitable for use in a vehicle. In such cases, kinetic energy may be added to the flywheel 3 during periods of deceleration of the vehicle. Kinetic energy stored in the flywheel 3 may be used to drive the wheels of the vehicle, e.g. to cause positive acceleration of the vehicle.

Additionally or alternatively, if the vehicle is, for instance, a service, construction or off-road/off-highway vehicle such as a lorry, a backhoe loader, a wheel loader, an excavator, a dumper truck or similar, the kinetic energy of the flywheel 3 may be used to cause another part of the vehicle, such as a lifting arm, a mechanical shovel, a cab or a tail lift, to move. A return motion (e.g. under gravity) of the part may in some cases cause kinetic energy to be added to the flywheel 3.

When the flywheel 3 is used in a vehicle, the dampers 6, 7 may serve to damp relative motion of the flywheel 3 and the housing 1 caused by the vehicle accelerating or braking, cornering, travelling over rough terrain, or being loaded with cargo or other materials.

As described above with reference to Figure 2, in some embodiments, a quill shaft 14 may be provided on one side of the flywheel 3 to engage the shaft 4 and to transfer rotational energy between the shaft 4 (and thus the flywheel 3) and a system such as a drive system 18. The quill shaft 14 may be slender and/or resiliently deformable, enabling it to flex enough to accommodate slight translational movement of the shaft 4 as radial dampers 6 are compressed and shaft 4 undergoes radial movement relative to the housing 1. This flexibility of the quill shaft 14 may prevent altogether or at least reduce relative radial movement the drive member 16 and the housing 1 when the flywheel 3 and shaft 4 move radially relative to the housing 1. This may prevent or reduce damage caused to the drive system 18 to which the other end of the drive member 16 is connected, and/or may prevent or reduce damage caused to a further sealing arrangement 20 when the shaft 4 moves relative to the housing 1.

As noted above, the quill shaft 14 may include a splined portion, which is arranged to accommodate axial movement of the shaft 4 relative to the housing 1 (for instance as axial dampers 7 are compressed).

Although the illustrated bearings are ball bearing-type bearings, other types of bearing which allow the desired form of relative movement of the shaft and a carrier may also be used. For instance, other types of rolling-element bearings may be used, as may fluid bearings, magnetic bearings, or plain bearings.

Furthermore, although in the illustrated examples there are two bearings 2 per bearing arrangement and one bearing arrangement per carrier, there may be any number of bearings 2 per bearing arrangement and any number of bearing arrangements per carrier, including only one bearing per bearing arrangement, more than two bearings per bearing arrangement, and/or two or more bearing arrangements per carrier. This applies also to embodiments in which the shaft 4 is supported in a cantilevered arrangement, i.e. the shaft 4 is supported on only one side of the flywheel 3.

In this document, the word "coupled" may mean directly or indirectly coupled. There may or may not be intervening components between two or more coupled elements.

## Claims

1. A flywheel system comprising
a flywheel (3) mounted on a shaft (4),
a bearing arrangement on which the shaft (4) is supported,
a housing (1) for housing the flywheel (3), the shaft (4), and the bearing arrangement (22), and
a link member (14) for transmitting torque, the link member (14) being arranged to be in torque-transmitting engagement, generally at a proximal end of the link member (14), with the shaft (4), and having generally at the distal end of the link member (14) engagement means for engaging a drive member (16) and **characterised by** the link member (14) being a quill shaft and being coupled to the shaft (4)_via a spline and arranged to allow relative radial and axial movement of the shaft (4) and the drive member (16).

2. A flywheel system according to claim 1, further including a damper (6, 7) for damping relative movement of the shaft (4) and the housing (1).

3. A flywheel system according to claim 1 or 2, further including a damper (6) arranged to damp relative movement of the flywheel (3) and the housing (1) in a radial direction with respect to the shaft axis.

4. A flywheel system according to any of claims 1 to 3, further including a damper (7) arranged to damp relative movement of the flywheel (3) and the housing (1) in an axial direction with respect to the shaft axis.

5. A flywheel system according to claim 4, wherein the damper (7) arranged to damp relative movement of the flywheel (3) and the housing (1) in an axial direction with respect to the shaft axis is provided on the same side of the flywheel (3) as the torque-transmitting engagement between the link member (14) and the shaft (4).

6. A flywheel system according to any one of the preceding claims, wherein the link member (14) is arranged to provide torsional compliance.

7. A flywheel system according to any one of the preceding claims, wherein the link member (14) is arranged to form a mechanical fuse.

8. A flywheel system according to claim 7, wherein the link member (14) is arranged to fracture at a predetermined torque limit.

9. A flywheel system according to claim 7, wherein the link member (14) is arranged to fracture at a pre-determined combination of shaft radial displacement with respect to the housing (1), and a predetermined torque limit.

10. A flywheel system according to any one of the preceding claims, further including a lubrication supply.

11. A flywheel system according to claim 10, wherein the lubrication supply is directed to the bearing arrangement (22).

12. A flywheel system according to claim 1 wherein the link member is allowed to slide within the shaft and/or within the drive member (16).

13. A flywheel system as claimed in any of the preceding claims, wherein the flywheel (3) is configured to rotate at speeds of 15,000 rpm or higher.

14. A flywheel system as claimed in any of the preceding claims, wherein the flywheel (3) is arranged to rotate within an evacuated chamber.

15. A flywheel system as claimed in any of the preceding claims, including a sealing arrangement (20) that encircles the shaft (4) and is arranged to form a hermetic seal between the shaft (4) and the housing (1).

16. A flywheel system as claimed in any of the preceding claims including a further bearing arrangement (22) mounted on the housing (1), wherein the further bearing arrangement (22) is arranged to constrain radial movement of the drive member (16).

17. An apparatus comprising the combination of a flywheel system according to any one of the preceding claims, and a flywheel drive system coupled to the drive member (16).

18. An apparatus according to claim 17, further comprising a fluid supply to the flywheel drive system.

19. An apparatus according to claim 18, wherein the fluid supply to the flywheel drive system is arranged to provide at least one of a lubrication, a cooling and an actuation function to the flywheel drive system.

20. An apparatus according to claim 19, including a further sealing arrangement (20) arranged to prevent fluid in the flywheel system and fluid in the flywheel drive system from mixing.

21. An apparatus according to claim 20 wherein the further sealing arrangement (20) encircles, contacts and forms a seal against the drive member.

22. An apparatus according to claim 20 or 21 wherein the fluid in the flywheel system and the fluid in the flywheel drive system are different from one another.

23. An apparatus according to any one of claims 18 to 21 when dependent on claim 10 or 11, wherein the fluid in the flywheel system is a vacuum oil and the fluid in the flywheel drive system is selected from one of a gear oil, a traction fluid and an automatic transmission fluid.

24. An apparatus according to any one of claims 17 to 21 wherein the flywheel drive system includes a plurality of selectable clutches.

## Patentansprüche

1. Schwungradsystem, umfassend
ein Schwungrad (3) montiert auf einer Welle (4),
eine Lageranordnung, auf der die Welle (4) gelagert ist,
ein Gehäuse (1) zum Aufnehmen des Schwungrads (3), der Welle (4) und der Lageranordnung (22), und
ein Verbindungselement (14) zum Übertragen von Drehmoment, wobei das Verbindungselement (14) angeordnet ist, um generell an einem proximalen Ende des Verbindungselements (14) mit der Welle (4) in drehmomentübertragendem Eingriff zu sein, und generell an dem distalen Ende des Verbindungselements (14) Eingriffseinrichtungen zum Eingreifen eines Antriebselements (16) aufweist, und **dadurch gekennzeichnet, dass** das Verbindungselement (14) eine Pinole ist und über eine Keilnut mit der Welle (4) gekoppelt ist, und angeordnet ist, um eine relative radiale und axiale Bewegung der Welle (4) und des Antriebselements (16) zu ermöglichen.

2. Schwungradsystem nach Anspruch 1, das ferner einen Dämpfer (6, 7) zum Dämpfen einer relativen Bewegung zwischen der Welle (4) und dem Gehäuse (1) beinhaltet.

3. Schwungradsystem nach Anspruch 1 oder 2, das ferner einen Dämpfer (6) beinhaltet, der angeordnet ist, um eine relative Bewegung des Schwungrads (3) und des Gehäuses (1) in radialer Richtung in Bezug auf die Wellenachse zu dämpfen.

4. Schwungradsystem nach Anspruch 1 oder 3, das ferner einen Dämpfer (7) beinhaltet, der angeordnet ist, um eine relative Bewegung des Schwungrads (3) und des Gehäuses (1) in axialer Richtung in Bezug auf die Wellenachse zu dämpfen.

5. Schwungradsystem nach Anspruch 4, wobei der Dämpfer (7), der angeordnet ist, um eine relative Bewegung des Schwungrads (3) und des Gehäuses (1) in axialer Richtung in Bezug auf die Wellenachse zu dämpfen, auf derselben Seite des Schwungrads (3) bereitgestellt ist wie der drehmomentübertragende Eingriff zwischen dem Verbindungselement (14) und der Welle (4).

6. Schwungradsystem nach einem der vorherigen Ansprüche, wobei das Verbindungselement (14) angeordnet ist, um eine Torsionsnachgiebigkeit bereitzustellen.

7. Schwungradsystem nach einem der vorherigen Ansprüche, wobei das Verbindungselement (14) angeordnet ist, um eine mechanische Sicherung zu bilden.

8. Schwungradsystem nach Anspruch 7, wobei das Verbindungselement (14) angeordnet ist, um bei einer vorbestimmten Drehmomentgrenze zu brechen.

9. Schwungradsystem nach Anspruch 7, wobei das Verbindungselement (14) angeordnet ist, um bei einer vorbestimmten Kombination von radialer Wellenverlagerung in Bezug auf das Gehäuse (1) und einer vorbestimmten Drehmomentgrenze zu brechen.

10. Schwungradsystem nach einem der vorherigen Ansprüche, das ferner eine Schmiermittelzufuhr beinhaltet.

11. Schwungradsystem nach Anspruch 10, wobei die Schmiermittelzufuhr auf die Lageranordnung (22) gerichtet ist.

12. Schwungradsystem nach Anspruch 1, wobei das Verbindungselement innerhalb der Welle und/oder innerhalb des Antriebselements (16) gleiten kann.

13. Schwungradsystem nach einem der vorherigen Ansprüche, wobei das Schwungrad (3) konfiguriert ist, um mit einer Drehzahl von 15.000 U/min oder mehr zu drehen.

14. Schwungradsystem nach einem der vorherigen Ansprüche, wobei das Schwungrad (3) angeordnet ist, um innerhalb einer evakuierten Kammer zu drehen.

15. Schwungradsystem nach einem der vorherigen Ansprüche, das eine Dichtungsanordnung (20) beinhaltet, die die Welle (4) umgibt und angeordnet ist, um eine hermetische Abdichtung zwischen der Welle (4) und dem Gehäuse (1) zu bilden.

16. Schwungradsystem nach einem der vorherigen Ansprüche, das eine weitere Lageranordnung (22) beinhaltet, die an dem Gehäuse (1) montiert ist, wobei die weitere Lageranordnung (22) angeordnet ist, um eine radiale Bewegung des Antriebselements (16) einzuschränken.

17. Vorrichtung, umfassend eine Kombination aus einem Schwungradsystem nach einem der vorherigen Ansprüche und einem mit dem Antriebselement (16) gekoppelten Schwungrad-Antriebssystem.

18. Vorrichtung nach Anspruch 17, ferner umfassend eine Fluidzufuhr für das Schwungrad-Antriebssystem.

19. Vorrichtung nach Anspruch 18, wobei die Fluidzufuhr zu dem Schwungrad-Antriebssystem angeordnet ist, um dem Schwungrad-Antriebssystem mindestens eine von einer Schmier-, einer Kühl- oder einer Antriebsfunktion bereitzustellen.

20. Vorrichtung nach Anspruch 19, die eine weitere Dichtungsanordnung (20) beinhaltet, die angeordnet ist, um eine Vermischung von Fluid in dem Schwungradsystem und Fluid in dem Schwungradantriebssystem zu verhindern.

21. Vorrichtung nach Anspruch 20, wobei die weitere Dichtungsanordnung (20) das Antriebselement umgibt, berührt und eine Dichtung dagegen bildet.

22. Vorrichtung nach Anspruch 20 oder 21, wobei das Fluid in dem Schwungradsystem und das Fluid in dem Schwungrad-Antriebssystem voneinander verschieden sind.

23. Vorrichtung nach einem der Ansprüche 18 bis 21, wenn abhängig von Anspruch 10 oder 11, wobei das Fluid in dem Schwungradsystem ein Vakuumöl ist und das Fluid in dem Schwungrad-Antriebssystem ausgewählt ist aus einem Getriebeöl, einem Traktionsfluid und einem Automatikgetriebefluid.

24. Vorrichtung nach einem der Ansprüche 17 bis 21, wobei das Schwungrad-Antriebssystem eine Vielzahl von auswählbaren Kupplungen beinhaltet.

## Revendications

1. Système de volant comprenant
un volant (3) monté sur un arbre (4),
un agencement de palier sur lequel l'arbre (4) est supporté,
un boîtier (1) pour loger le volant (3), l'arbre (4) et l'agencement de palier (22), et
un élément de liaison (14) pour transmettre le couple, l'élément de liaison (14) étant conçu pour être en prise de transmission de couple, généralement au niveau d'une extrémité proximale de l'élément de liaison (14), avec l'arbre (4), et comportant généralement au niveau de l'extrémité distale de l'élément de liaison (14) un moyen de mise en prise pour mettre en prise un élément d'entraînement (16) et **caractérisé en ce que** l'élément de liaison (14) est un arbre creux et est couplé à l'arbre (4) par l'intermédiaire d'une cannelure et conçu pour permettre un déplacement radial et axial relatif de l'arbre (4) et de l'élément d'entraînement (16).

2. Système de volant selon la revendication 1, comprenant en outre un amortisseur (6, 7) pour amortir le déplacement relatif de l'arbre (4) et du boîtier (1).

3. Système de volant selon la revendication 1 ou 2, comprenant en outre un amortisseur (6) conçu pour amortir le déplacement relatif du volant (3) et du boîtier (1) dans une direction radiale par rapport à l'axe de l'arbre.

4. Système de volant selon l'une quelconque des revendications 1 à 3, comprenant en outre un amortisseur (7) conçu pour amortir le déplacement relatif du volant (3) et du boîtier (1) dans une direction axiale par rapport à l'axe de l'arbre.

5. Système de volant selon la revendication 4, ledit amortisseur (7) conçu pour amortir le déplacement relatif du volant (3) et du boîtier (1) dans une direction axiale par rapport à l'axe de l'arbre étant pourvu sur le même côté du volant (3) en tant que prise de transmission de couple entre l'élément de liaison (14) et l'arbre (4).

6. Système de volant selon l'une quelconque des revendications précédentes, ledit élément de liaison (14) étant conçu pour assurer une élasticité en torsion.

7. Système de volant selon l'une quelconque des revendications précédentes, ledit élément de liaison (14) étant conçu pour former un fusible mécanique.

8. Système de volant selon la revendication 7, ledit élément de liaison (14) étant conçu pour se rompre à une limite de couple prédéfinie.

9. Système de volant selon la revendication 7, ledit élément de liaison (14) étant conçu pour se rompre à une combinaison prédéfinie d'un déplacement radial de l'arbre par rapport au boîtier (1) et d'une limite de couple prédéfinie.

10. Système de volant selon l'une quelconque des revendications précédentes, comprenant en outre une alimentation en lubrifiant.

11. Système de volant selon la revendication 10, ladite alimentation en lubrifiant étant dirigée vers l'agencement de palier (22).

12. Système de volant selon la revendication 1, ledit élément de liaison pouvant coulisser à l'intérieur de l'arbre et/ou à l'intérieur de l'élément d'entraînement (16).

13. Système de volant selon l'une quelconque des revendications précédentes, ledit volant (3) étant conçu pour tourner à des vitesses de 15 000 tr/min ou plus.

14. Système de volant selon l'une quelconque des revendications précédentes, ledit volant (3) étant conçu pour tourner à l'intérieur d'une chambre sous vide.

15. Système de volant selon l'une quelconque des revendications précédentes, comprenant un agencement d'étanchéité (20) qui entoure l'arbre (4) et est conçu pour former un joint hermétique entre l'arbre (4) et le boîtier (1).

16. Système de volant selon l'une quelconque des revendications précédentes, comprenant un autre agencement de palier (22) monté sur le boîtier (1), ledit autre agencement de palier (22) étant conçu pour limiter le déplacement radial de l'élément d'entraînement (16).

17. Appareil comprenant la combinaison d'un système de volant selon l'une quelconque des revendications précédentes, et d'un système d'entraînement de volant couplé à l'élément d'entraînement (16).

18. Appareil selon la revendication 17, comprenant en outre une alimentation en fluide vers le système d'entraînement de volant.

19. Appareil selon la revendication 18, ladite alimentation en fluide vers le système d'entraînement de volant étant conçue pour fournir au moins l'un parmi une lubrification, un refroidissement et une fonction d'actionnement au système d'entraînement de volant.

20. Appareil selon la revendication 19, comprenant un autre agencement d'étanchéité (20) conçu pour empêcher le fluide dans le système de volant et le fluide dans le système d'entraînement de volant de se mélanger.

21. Appareil selon la revendication 20, ledit autre agencement d'étanchéité (20) encerclant, étant en contact et formant un joint contre l'élément d'entraînement.

22. Appareil selon la revendication 20 ou 21, ledit fluide dans le système de volant et ledit fluide dans le système d'entraînement de volant étant différents l'un de l'autre.

23. Appareil selon l'une quelconque des revendications 18 à 21 lorsqu'elles dépendent de la revendication 10 ou 11, ledit fluide dans le système de volant étant une huile sous vide et ledit fluide dans le système d'entraînement de volant étant choisi parmi l'un d'une huile pour engrenages, d'un fluide de traction et d'un fluide de transmission automatique.

24. Appareil selon l'une quelconque des revendications 17 à 21, ledit système d'entraînement de volant comprenant une pluralité d'embrayages sélectionnables.
